(19) Europäisches Patentamt
European Patent Office
Office européen des brevets

(11) **EP 0 792 838 A1**

## (12) EUROPÄISCHE PATENTANMELDUNG

(43) Veröffentlichungstag:
**03.09.1997 Patentblatt 1997/36**

(51) Int. Cl.⁶: **C01F 7/74**, C01B 17/20,
C01G 1/00

(21) Anmeldenummer: **97101528.4**

(22) Anmeldetag: **31.01.1997**

(84) Benannte Vertragsstaaten:
**AT BE GB NL**

(30) Priorität: **27.02.1996 DE 19607300**

(71) Anmelder: **Klein, Klaus**
**37520 Osterode/Harz (DE)**

(72) Erfinder: **Klein, Klaus**
**37520 Osterode/Harz (DE)**

(54) **Verfahren und Vorrichtung zur Herstellung von Salzlösungen**

(57) Bei der Behandlung von Metalloberflächen in sauren bzw. alkalischen Lösungen entstehen Abfälle, die kostenaufwendig entgiftet und entsorgt werden müssen. Ziel der Erfindung ist es, die Metallsalze aus diesen Lösungen zu einem sekundären Rohstoff zu verarbeiten, ohne dabei Primärrohstoffe einzusetzen. Für den Betreiber ergeben sich hieraus ökonomische Vorteile indem für die Sekundärrohstoffe Erlöse erzielt werden können, und für die Natur ökologische Vorteile da weniger Schadstoffe entsorgt werden müssen.

Printed by Rank Xerox (UK) Business Services
2.14.12/3.4

**Beschreibung**

**1. Beschreibung**

Die Erfindung betrifft ein Verfahren zur Herstellung von Sekundär-Rohstoffen aus Abfall-Lösungen, die in Betrieben der Oberflächenveredelung von Metallen anfallen, gemäß Oberbegriff von Anspruch 1, sowie eine Vorrichtung zur Durchführung des Verfahrens.

Bei der Oberflächenveredelung von Metallen entstehen u.a. Abfallsäuren mit darin gelösten Metallsalzen, die kostenaufwendig entsorgt werden müssen. Die Entsorgung erfolgt in der Regel durch Neutralisation und Metallfällung. Die dabei entstehenden Produkte, Salzwasser und Metallhydroxidschlamm müssen entsorgt werden. Für die Salzfracht ins Abwasser existieren Limitierungen, deren Einhaltung spezielle Behandlungsmethoden verlangen, der Hydroxidschlamm muß auf Sonderdeponien entsorgt werden.

Vielfach werden so Lösungen mit Wertstoffen vernichtet (neutralisiert), die nur Abfall sind, weil sie aus 2 Komponenten bestehen. Jede Komponente für sich wäre als Rohstoff wieder verwertbar. Freie Säure ohne Metallsalze könnte wieder in der Oberflächenveredelung eingesetzt werden, Metallsalze ohne freie Säure sind Rohstoffe für andere chemische Prozesse. Die Voraussetzung für eine Wiederverwendung von Abfall-Lösungen als Sekundär-Rohstoff ist also die Erzeugung einer einphasigen Lösung aus mehrphasigen Lösungen. Dies soll am Beispiel von Abfall-Lösungen aus einem Eloxalbetrieb beschrieben werden.

Im Eloxalbereich fällt Schwefelsäure verunreinigt mit Aluminiumsulfat als Abfall an und muß entsorgt werden. In der Regel erfolgt die Entsorgung durch Neutralsation mit Natronlauge, die als Abfall aus alkalischen Beizbädern zur Verfügung steht. Dabei entstehen große Mengen von natriumsulfathaltigem Abwasser sowie ein Filterkuchen, bestehend aus Aluminiumhydroxid. Zur Verringerung der Sulfatfracht ins Abwasser werden Anlagen eingesetzt (Retardationsanlagen, Diffusionsdialysen) um die freie Schwefelsäure zurückzugewinnen, um so die Sulfatfracht ins Abwasser zu verringern. Das Aluminiumsulfat muß aber nach wie vor wie oben beschrieben entsorgt werden. Eine Verwendung als Rohstoff ist in der Form, wie es die Regenerationsanlagen abgeben, noch nicht möglich. Diese Lösungen sind stark verdünnt und enthalten noch einen kleinen Anteil an freien Säuren. Selbst wenn die freie Säure nach dem erfindungsgemäßen Verfahren entfernt werden würde, wäre eine Verdampfung der Lösung erforderlich, um diese als Wertstoff einzusetzen. Für die Verdampfung müßte Primärenergie eingesetzt werden.

Eine Umwandlung der Säure in der Aluminiumsulfatlösung mittels Neutralisation ist keine Problemlösung, da dadurch Fremdchemikalien in die Aluminiumsulfatlösung eingebracht würden.
Potentielle Abnehmer des Aluminiumsulfates würden dies nicht akzeptieren.

Die Erfindung stellt sich die Aufgabe, ein verbessertes Verfahren der eingangs erwähnten Art zur Verfügung zu stellen, bei der folgende Kriterien erfüllt werden sollen:

- Erzeugung einer möglichst reinen Metallsalzlösung mit einer Konzentration nahe der Löslichkeitsgrenze des Metallsalzes in der Lösung

- Weitestgehender Verzicht auf Eindampfung der verdünnten Metallsalzlösungen und damit Verzicht auf Einsatz von Primärenergie..

- Umsetzung der freien Säure in der Metallsalzlösung mit einem Metallhydroxid, ohne daß die Lösung dabei nennenswert verunreinigt wird.

- Herstellung von, für die Umsetzung der freien Säure erforderlichen, Metallhydroxid aus Abfall-Lösungen..

Diese Aufgaben wurden gelöst mit einem Verfahren gemäß Anspruch 1 und einer Vorrichtung gemäß Anspruch 14

**2. Das Verfahren**

Handelsübliche Aluminiumsulfatlösungen haben eine Konzentration von ca. 8 % Al2O3, was nahe an der Löslichkeitsgrenze liegt. Dies entspricht in etwa einem Aluminiumgehalt von 45 g/l und einem Sulfatgehalt von 240 g/l. Herkömmliche Eloxalbäder haben einen Sulfatgehalt von +/- 240 g/l und einen Aluminiumgehalt von +/- 10 g/l. Vom Sulfatgehalt erfüllen die Eloxalbäder die Spezifikationen für die Aluminiumsulfatlösungen nicht jedoch vom Aluminiumgehalt und vom pH-Wert. Wird nun in dieser Lösung Aluminium aufgelöst, so wird die freie Säure in ein Aluminiumsulfat umgewandelt und der pH-Wert der Lösung angehoben.

Die Einbringung von Aluminium könnte durch Aluminiumschrott erfolgen, welcher langsam in der Säure aufgelöst wird. Dieser Vorgang mit Aluminiumschrott ist sehr zeitaufwendig, da die Auflösungsrate klein ist. Eine Unterstützung der Auflösung von Aluminium durch elektrischen Strom hilft ebenfalls nicht viel, da zum größten Teil Aluminiumoxid gebildet wird (Anodisierprozess). Außerdem sollte bei dem Prozess auf die Verwendung von Rohstoffen verzichtet werden und somit auch auf den Sekundär-Rohstoff Aluminiumschrott. Es sollte auf einen Abfallstoff zurückgegriffen werden, der als solcher in einem Eloxalwerk anfällt und entsorgt werden müßte. Hier bietet sich Aluminiumhydroxid (Filterkuchen) aus dem alkalischen Beizbereich an. Das Aluminiumhydroxid kann sowohl als amorphes Hydroxid durch Neutralisation oder als kristallines Hydroxid durch Kristallisation erzeugt werden. Der Vorteil der Kristallisation liegt in der Rückgewinnung der Natronlauge. Dieser Prozeß hat jedoch Einfluß auf die Qualität des Endproduktes und ist daher nicht ohne weiteres einsetzbar.

Werden alkalische Beizbäder neutralisiert, fällt ein Aluminiumhydroxid aus, welches je nach Verwendung der Neutralisationschemikalien eine hohe Reinheit hat. Verunreinigungen werden in der Regel über das Restwasser des Filterkuchens verursacht. Da bei der Aluminiumfällung der Filterkuchen eine Restfeuchte von ca. 70 % aufweist, muß hier besondere Aufmerksamkeit auf die Salzfrachten im Restwasser gelegt werden, da diese Verunreinigungen in die zu erzeugende Aluminiumsulfatlösung eingeschleppt werden. Entsprechend dem erfindungsgemäßen Verfahren werden für die Fällung von Aluminium aus dem alkalischen Beizbad zwei Verfahren angeboten, die beide das zu erzeugende Aluminiumhydroxid wenig verunreinigen.

A) Neutralisation der Beize und der zugehörigen Spülwässer mit CO2

Gem. Reaktionsgleichung

$$2\, NaOH + CO_2 = 2\, Na\, CO_3 + H_2O$$

wird durch Einleitung von CO2 in die alkalische Abfallbeize Natriumcarbonat gebildet und durch die pH-Wert Verschiebung das Aluminat als Aluminiumhydroxid ausgefällt. Die Neutralisation mit CO2 erlaubt die Beibehaltung der herkömmlichen Beizverfahren (E-6 bzw Never dump).
CO2 steht in der Regel im Abgas von Feuerungsanlagen in ausreichender Menge zur Verfügung. Besonders geeignet sind Feuerungsanlagen, die mit Erdgas betrieben werden. Das bei der Neutralisation erzeugte Abwasser besteht im wesentlichen aus Natriumcarbonat. Dieses Abwasser kann als Spülwasser wieder nach sauren Prozessen (11) eingesetzt werden. Es bewirkt eine Vorneutralisation des Spülwassers, aus dem das Carbonat als CO2 wieder ausgast.

Ähnlich verläuft die Reaktion des Carbonates im Restwasser des Filterkuchens, der benutzt wird, um die Schwefelsäure in Aluminiumsulfat umzusetzen. In der Aluminiumsulfatlösung verbleibt nur eine Restmenge von Natrium, nicht aber ein Säurerest einer Fremdchemikalie. Die Begrenzung der Natriumkonzentrationen in der Aluminiumsulfatlösung sind nicht so eng gefaßt wie bei anderen Elementen.

Eine Neutralisation der alkalischen Beize mit Salzsäure bzw. Schwefelsäure ist ungünstig. Bei Salzsäure stören die Chloride in der Sulfatlösung; bei Neutralisation mit Schwefelsäure wird eine große Menge an sulfathaltigem Abwasser erzeugt, was von der Aufgabenstellung her vermieden werden soll. Ferner müßten beide Chemikalien als Primär-Rohstoff eingesetzt werden, da man ansonsten mit gebrauchten Lösungen Verunreinigungen in die Aluminiumsulfatlösung einbringen würde.

B) Ausfällung des Aluminats zu kristallinem Aluminiumhydroxid

Dort, wo eine Umstellung der Beizbedingungen vom Never dump Verfahren zu einer regenerierbaren Beize möglich ist, bietet sich eine Kristallisation des Aluminats an. Der Vorteil dieses Verfahrens liegt in der vollständigen Rückgewinnung der Natronlauge und der Ausfällung des Aluminats ohne Fremdchemikalien.(Bayer Prozess).Die Rücklösung des kristallinen Aluminiumhydroxids in der Schwefelsäure erfolgt wie oben beschreiben.

**Die mit der Erfindung erzielten Vorteile bestehen insbesondere darin, daß**

- die Sulfatfracht ins Abwasser reduziert wird und damit die gesetzlichen Einleitbedingungen eingehalten werden können.
- die Menge an zu deponierenden Filterkuchens (Metallhydroxid bzw. Kalziumsulfat) drastisch reduziert wird.
- Erzielung eines Erlöses aus Abfallstoffen die sonst kostenaufwendig entsorgt werden müßten.
- Reduzierung des CO2 Ausstoßes aus Feuerungsanlagen bei Verwendung von Rauchgasen als Neutralisationschemikalie für alkalische Abwasserströme.

**3. Vorrichtung zur Durchführung des Verfahrens**

Die erfindungsgemäße Vorrichtung neutralisiert Lösung aus einer alkalischen Beize (1)für Aluminium unter Verwendung von CO2 als Neutralisationschemikalie. Die Vorrichtung besteht im wesentlichen aus einer Überführungsstrecke vom alkalischen Beizbad (1) zum Neutralisationsbehälter (3), einem Neutralisationsbehälter (3) mit Rührwerk (8) und pH-Messung und einer Vorrichtung zur Entwässerung (5) des erzeugten Aluminiumhydroxides sowie einer Überführungsstrecke von der Entwässerungseinrichtung zum Reaktionsbehälter (4) für Aluminiumsulfat.
Als Neutralisationschemikalie soll CO2 verwendet werden, welches über einen Injektor (6) (Wasserstrahlpumpe) angesaugt wird. Das CO2 kann aus industrieller Produktion aber auch aus Abgasen von Erdgas-Feuerungsanlagen stammen. Der Neutralisationsprozess ist pH kontrolliert. Das ausgefällte Aluminiumhydroxid wird in einer Filterpresse, Zentrifuge (5) o.ä. entwässert, ein anschließendes Waschen des Filterkuchens mit Wasser ist vorteilhaft um möglichst viele Verunreinigungen, die sich in der Restfeuchte befinden, auszutreiben.

Das so erzeugte Aluminiumhydroxid wird nun in einen Behälter (4), welcher die Abfallsäure aus der Eloxalstufe enthält, eingeleitet und so lange gerührt, bis die gesamte freie Schwefelsäure zu Aluminiumsulfat umgesetzt worden ist. Eine Beheizung (7) des Reaktionsbehälters (4) erhöht die Reaktionsgeschwindigkeit und ist daher vorteilhaft. Die Umsetzung der Säure zum Aluminiumsulfat wird über eine pH-Messung (13) kontrolliert. Das Rühren wird bis zu einem pH-Wert > 2,2 fortgesetzt. Die Lösung wird daraufhin in Ruhe versetzt, damit das überschüssige Aiuminiumhydroxid, welches noch nicht rückgelöst wurde, sich absetzen kann. Die klare Aluminiumsulfatlösung wird anschließend abgezogen und für den Abtransport in einem Lagerbehälter (12) gespeichert.

In der Regel werden keine weiteren Puffertanks für die Eloxalbad-Lösung benötigt, da die Eloxalbäder selber puffernd wirken. Es dürfte ausreichend sein, wenn 1 x pro Tag eine Menge vom Eloxalbad in den Rührbehälter übergepumpt und behandelt wird. Sollte es aus Kapazitätsgründen erforderlich werden, daß die Absetzzeiten im Rührbehälter benötigt werden, müßte eine aktive Filtrierung (10) der fertiggestellten Aluminiumsulfatlösung in Betracht gezogen werden.

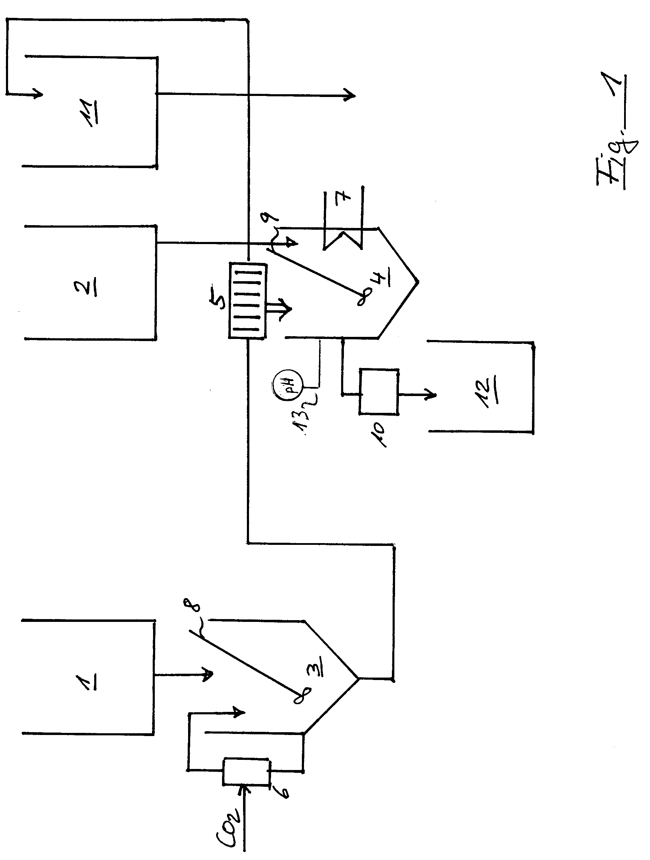

## Patentansprüche

1. Verfahren zur Erzeugung von reinen Metallsalzlösungen aus metallhaltigen sauren Abfalllösungen die bei der chemischen Bearbeitung von Metallen anfallen, dadurch gekennzeichnet, daß

   eine metallsalzhaltige saure Abfalllösung mit einer Gesamtsäurekonzentration größer als 50 % der Konzentration der Gesamtsäure an der Löslichkeitsgrenze der Metallsalze mit einem dem Metallsalz entsprechenden Metallhydroxid in Kontakt gebracht wird und dabei der saure Anteil der Lösung in ein entsprechendes Metallsalz umgewandelt wird,

   und das für die Erzeugung des Metallsalzes erforderliche Metallydroxid aus einer alkalischen Abfalllösung durch einbringen von Kohlendioxid in einer Weise hergestellt wird, welche die zu erzeugende Metallsalzlösung nicht bzw. nur im geringen Maß verunreinigt.

2. Verfahren nach Anspruch 1, dadurch gekennzeichnet, daß für die Erzeugung des Metallsalzes keine Primär-Chemikalien verwendet werden.

3. Verfahren nach Anspruch 1 bis 2, dadurch gekennzeichnet, daß das erforderliche Metallhydroxid im stöchiometrischen Überschuß in die saure Metallsalzlösung dosiert wird.

4. Verfahren nach Anspruch 1 bis 3, dadurch gekennzeichnet, daß die Metallsalzlösung ohne Eindampfung eine Konzentration von größer als 50 % der Konzentration an der Löslichkeitsgrenze aufweist.

5. Verfahren nach Anspruch 1 bis 4, dadurch gekennzeichnet, daß die Lösung während des Kontaktes mit dem Metallhydroxid mit einem Rührwerk intensiv bewegt wird.

6. Verfahren nach Anspruch 1 bis 5, dadurch gekennzeichnet, daß die Lösung während des Kontaktes mit dem Metallhydroxid auf eine Temperatur von 30 bis 70 °C, bevorzugt auf 50 °C aufgeheizt wird.

7. Verfahren nach Anspruch 1 bis 6, dadurch gekennzeichnet, daß die Lösung solange in Kontakt mit einem Metallhydroxid gebracht wird bis der pH-Wert der Lösung einen Wert erreicht hat, der darauf schließen läßt, daß die freie Säure in Metallsalz umgesetzt ist.

8. Verfahren nach Anspruch 1 bis 7, dadurch gekennzeichnet, daß die im pH-Wert angepaßte Metallsalzösung filtriert wird.

9. Verfahren nach Anspruch 1 bis 8, dadurch gekennzeichnet, daß für die Herstellung des Metallhydroxides ein Abfallstrom aus alkalischen Prozessen verwendet wird.

10. Verfahren nach Anspruch 9, dadurch gekennzeichnet, daß die Metalle aus der alkalischen Abfalllösung mit $CO_2$ als Chemikalie gefällt werden.

11. Verfahren nach Anspruch 9 bis 10 dadurch gekennzeichnet, daß als $CO_2$ Quelle Rauchgase aus Feuerungsanlagen benutzt werden.

12. Verfahren nach Anspruch 9 dadurch gekennzeichnet, daß für die Herstellung des Metallhydroxides aus alkalische Abfalllösungen ein Kristallisationsverfahren genutzt wird

13. Verfahren nach Anspruch 9 bis 12 dadurch gekennzeichnet, daß das ausgefällte Metallhydroxid entwässert und gewaschen wird.

14. Vorrichtung zur Durchführung des Verfahrens nach den vorhergehenden Ansprüchen 1 bis 13 mit

   a) einem alkalischen Beizbad (1)
   b) einem sauren Beizbad (2)
   c) einem Behälter zum Ausfällen von Metallen aus alkalischen Beizlösungen (3)
   d) einem Behälter zum Rücklösen von Metallhydroxiden in sauren Lösungen (4)
   e) einer Einrichtung zur Entwässerung von Metallhydroxiden (5)

f) einer Einrichtung zur Dosierung von CO2 (6)

g) einer Einrichtung zur Beheizung des Rücklösebehälters (7)

15. Vorrichtung nach Anspruch 14 dadurch gekennzeichnet, daß
für die Dosierung von CO2 in den Behälter (3) eine Wasserstrahlpumpe (6) benutzt wird.

16. Vorrichtung nach Anspruch 14 bis 15, dadurch gekennzeichnet, daß
der Reaktor für die Metallfällung (3) mit einem Rührwerk (8) versehen ist.

17. Vorrichtung nach Anspruch 14 bis 16, dadurch gekennzeichnet, daß
der Reaktor (4) mit einer Heizeinrichtung (7) versehen ist.

18. Vorrichtung nach Anspruch 14 bis 17, dadurch gekennzeichnet, daß
in die aus dem Reaktor (4) kommende Entleerungsleitung eine Filtrieranlage (10) eingebaut ist.

Fig. 1

<table>
<tr><td rowspan="2">Europäisches<br>Patentamt</td><td rowspan="2" style="text-align:center">EUROPÄISCHER RECHERCHENBERICHT</td><td>Nummer der Anmeldung</td></tr>
<tr><td>EP 97 10 1528</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | CHEMICAL ABSTRACTS, vol. 110, no. 26, 26.Juni 1989 Columbus, Ohio, US; abstract no. 234103, NIECKO, JERZY: "Manufacture of an aluminum coagulant from alkaline wastewater" XP000180441 * Zusammenfassung * & GOSPOD. WODNA (1988), 48(7), 158-60 CODEN: GOWOAC;ISSN: 0017-2448, --- | 1-18 | C01F7/74 C01B17/20 C01G1/00 |
| Y | FR 2 623 489 A (YOSHIDA KOGYO KK) 26.Mai 1989 * das ganze Dokument * --- | 1-18 | |
| A | DE 41 07 287 A (VAW VER ALUMINIUM WERKE AG) 10.September 1992 * das ganze Dokument * --- | 1,10-13 | |
| A | DE 25 54 218 A (HERAEUS GMBH W C) 25.August 1977 * das ganze Dokument * --- | 1 | RECHERCHIERTE SACHGEBIETE (Int.Cl.6) |
| A | GB 621 741 A (FIRESTONE TIRE AND RUBBER COMPANY) ----- | | C01F C01B C01G C23F |

Der vorliegende Recherchenbericht wurde für alle Patentansprüche erstellt

| Recherchenort | Abschlußdatum der Recherche | Prüfer |
|---|---|---|
| DEN HAAG | 16.Juni 1997 | ZALM, W |